# EUROPEAN PATENT SPECIFICATION

(11) **EP 2 505 009 B1**
(45) Date of publication and mention of the grant of the patent: **16.08.2017**
(21) Application number: 09851381.5
(22) Date of filing: 23.11.2009
(51) Int. Cl.: H04B 7/026, H04B 7/0413, H04B 7/06, H04B 7/08, H04L 5/00, H04L 27/26, H04L 25/03

(54) **COOPERATIVE COMMUNICATIONS IN CELLULAR NETWORKS**
KOOPERATIVE KOMMUNIKATION IN MOBILFUNKNETZEN
COMMUNICATIONS EN COOPÉRATION DANS DES RÉSEAUX CELLULAIRES

(43) Date of publication of application: 03.10.2012
(73) Proprietor: ALCATEL LUCENT, 92100 Boulogne-Billancourt (FR)
(72) Inventor: CHEN, Yu, Shanghai 201206 (CN); ZHANG, Bijun, Shanghai 201206 (CN); WILD, Thorsten, 70435 Stuttgart (DE)
(74) Representative: Wetzel, Emmanuelle
(86) International application number: PCT/CN2009/075082
(87) International publication number: WO 2011/060589

(56) References cited:
- WO-A1-02/15613
- WO-A1-2008/123662
- WO-A2-2008/008691
- CN-A- 1 732 651
- CN-A- 101 198 167
- US-A1- 2008 310 405

## Description

### Field of the Invention

The invention relates to the field of telecommunications, and, more specifically, to cooperative communications between mobile stations adapted to perform wireless communications with at least one base station.

### Background

This section introduces aspects that may be helpful in facilitating a better understanding of the invention. Accordingly, the statements of this section are to be read in this light and are not to be understood as admissions about what is in the prior art or what is not in the prior art.

The basic concept of cooperative communications is that two or more nodes, e.g. mobile terminals, may relay data mutually, the cooperative communications between the mobile terminals being typically based on an air interface relay. The data received from the relay node may be taken as if transmitted from another base station. However, cooperative communications may cause security issues as, typically, it is assumed that there is no restriction of partnership between the cooperating mobile terminals. Moreover, when one mobile station acts as a relay node for another mobile station, the wireless system typically has to allocate twice the resources, namely one time for the communication of the base station with the mobile station(s), and a second time for the communications between the mobile stations. Hence, cooperative communications operate at the cost of high occupation of resources.

Moreover, the spectral efficiency, the cell border throughput, and the range of cells in a cellular mobile communications system depend on the number of antennas at both ends of a wireless link between base station and mobile station. More antennas in the link allow for better capabilities in increasing the quality of the useful signal and suppressing unwanted signals (interference). However, the number of antennas of the mobile terminals is limited due to form factor, cost of RF chains, etc.

In a document WO 02/15613 A1 a wireless communication system is introduced, which uses a method of improving diversity gain by utilizing a first network operating with a first protocol and at least a second network formed from a plurality of cooperative wireless devices operating with a second protocol and at least the first protocol.

In another document WO 2008/008691 A2 multiple wireless user devices are described, which act cooperatively to communicate with a remote destination node through a MIMO- channel. In at least one embodiment, a cooperative cluster of user devices is formed that makes use of vertical coding techniques to achieve enhanced communication performance.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method according to claim 1.

The present inventors propose to use the built-in capabilities of some of today's mobile devices to perform short-range communications using a transmission technology which is different from the transmission technology for communicating with the base station in order to improve the performance of the communications of the mobile stations with the base station. For this purpose, a cooperating cluster of mobile stations is formed, allowing to exchange data as well as channel state information between the mobile stations of the cluster without the need of allocating additional resources which have to be provided by the first transmission technology. Moreover, when using MIMO techniques, in particular (linear) pre-coding and spatial multiplexing, the problem that only a limited number of antennas can be deployed in a single mobile station can be mitigated. In particular, it may be possible to treat the whole cooperating cluster as one virtual mobile station with many antennas,

The transmission technology for the short-range communications may be a wireless or wire-line technology (cabling). When a wireless technology is used, the communications may be performed using an out-of-band frequency range, i.e. in a frequency range being different from that used for communications with the base station. In this case, technologies such as Wireless Local Area Network (WLAN 802.11x) technology or Bluetooth technology may be used. However, it is also possible to use some sort of overlay technology which may cover the frequency range used for the communication with the base station, such as Ultra Wide Band technology.

Advantageously, for forming the cooperating cluster, at least one mobile station requests cooperation with (i.e. sends a cooperation request to) at least one further mobile station, the further mobile station accepting or rejecting the request, based on at least one of an approval or disapproval of a user of the further mobile station, a battery status of the further mobile station, or a velocity of the further mobile station.

As security is an issue, it should be possible for the users of the mobile stations to choose whether or not they want to join the cluster, thus restricting the communications in the cluster to reliable partners. A user who has turned on the clustering option may benefit for its own data transmission/reception from the cluster but also has to help other users by assisting the communications within the cluster.

Thus, also mobile stations which have no data to transmit are assisting the other mobile stations of the cluster and are thus using their battery power for the other mobile stations. In order to make sure that no problems for the users of the mobile stations having low battery status may occur, it is suggested that, when a cluster is formed, the battery status is also checked and 'helper' mobiles with low battery status (or below a certain threshold of battery capacity) do not participate in the cluster. A further step for reducing the battery power consumption may be to reduce the processing of assisting mobiles only to a required minimum. This can be done by informing the assisting mobiles in the cluster via short-range communications when they have to "wake up" for processing.

Also, as the mobile stations are moving all the time, they may relatively quickly leave the range in which short-range transmissions with the other mobile stations of the cluster are possible, such that the number of mobiles in the cluster may vary rapidly. Thus, for maintaining a robust cooperation of the mobile stations in the cluster, mobile stations which have a velocity which exceeds a certain level should typically not be allowed to join the cluster.

Typically, the short-range communications may be performed using a cooperation protocol defining one mobile station of the cluster as a master station, and at least one further mobile station of the cluster as a slave station. It will be appreciated that the assignment master / slave may depend on the contents which are transmitted in the cluster. For instance, in an application such as Multimedia Broadcast Multicast Services (MBMS) for distributing a plurality of Mobile TV channels, one mobile station may be a master station for a certain channel, and for another channel, the same mobile station may be a slave station. For coordinating the communications between the master / slave stations, a dedicated cooperation protocol may be used, e.g., for configuring the physical layer of the slave terminal, in particular the resource blocks received and the Modulation and Coding Schemes (MCS).

Even when performing the short-range communications only between two mobile stations, the benefits are considerable, as in general, the capacity can be doubled, as the received SNR may improve by several dB in the multi-path channel, thus allowing to speed up the communications. This may also be advantageously used for long-distance communications (possibly leading to significant coverage extension). Moreover, mobile stations at the cell edge will also be able to receive enhanced layer (High definition) Mobile TV when a scalable codec is used. In particular when the second transmission technology is implemented using the same transceiver (e.g. when an overlay technology such as UWB is used) or cabling, the mobile station needs only one transceiver, but enjoys the performance of a dual receiver. Moreover, when equipping a single mobile station with more than one, e.g., with two or four antennas, due to the constrained space for placement of the antennas, the antennas may have some correlation which may undermine the channel capacity. One benefit of using antennas of different mobile stations for the reception is that the mutual distance of the antennas will be at least several tens of the wavelength, such that the antennas will become decorrelated.

In one variant, the short-range communications are performed for transmitting at least one of data, channel state information, and antenna weights from at least one mobile station of the cluster to at least one further mobile station of the cluster, the data being preferably transmitted in the form of time-domain IQ samples, frequency domain IQ samples, soft bits, or decoded data.

For downlink reception, all data intended for one mobile station may be collected by the whole cluster, i.e. by all mobile stations of the cluster. Then, this information has to be transported via short-range mobile-to-mobile communications to the targeted mobile station. The targeted mobile station may treat this information as just having extra antenna branches, doing channel estimation, demodulating the symbols, combining the antennas using MIMO receive algorithms, e.g. Minimum Mean-Square Error (MMSE) reception, optionally with successive interference cancellation, and decoding of the received data.

For the format of the communications, there are different possibilities: Forwarding time-domain IQ-samples to all cluster neighbors will consume huge bandwidths for the short-range mobile-to-mobile links. When forwarding frequency-domain IQ-samples, the bandwidth may be reduced by just forwarding frequency regions (resource blocks) which contain scheduled data for the targeted cluster mobile. Further options regarding the format of the data transmission include forwarding of soft bits or decoded data.

For uplink data transmission without having channel state information, open-loop MIMO techniques may be used (e.g. space-time-frequency-block coding or BLAST). For better performance, MIMO techniques using channel state information are recommended. For instance, in a network using Time Division Duplex, TDD, mobile stations of the cluster listening to the downlink pilot symbols shall forward the channel state information to their cluster partners, which may exploit the channel reciprocity for transmit weight calculation in the uplink.

When a mobile wants to transmit uplink data, it may distribute data plus linear precoding transmit weights to its neighbors. Again, like in the downlink, there are several options how to do this: Using time-domain IQ-samples, frequency domain IQ-samples, data symbols plus weights, data bits plus weights etc.

Due to the large number of transmit antennas of the cluster, the design of the linear precoder may now fulfill several objectives at once, e.g. maximizing the total receive power at the desired serving cell while minimizing interference in neighboring cells. For instance, a cluster of 12 single-transceiver-antenna mobiles using linear precoding may maximize the receive power of a 4-antenna base station sector at each receiver antenna and additionally null out (or suppress) interference at two neighboring cells (each with 4 receiver antennas).

In a further variant, the mobile stations of the cluster use the short-range communications to perform coordinated wireless communications with the base station to act as a single virtual mobile station. When the uplink pilot symbols are precoded with the same weights as the data (see above), the cluster may appear transparent to the base station, acting as one virtual mobile.

In a further variant, the mobile stations of the cluster are time synchronized, preferably using at least one of a time synchronization protocol, in particular a Precision Time Protocol, PTP (IEEE 1588), a Global Positioning System, GPS, and a synchronization mechanism inherent to the first and/or the second transmission technology. For the coordinated communication, a dedicated time synchronization protocol may be used, or synchronization mechanisms / protocols which are inherent to the first / second transmission technology may be employed. Also, a common time reference, e.g. provided by a GPS system, may be used. It will be understood that in general, all mobile stations of the cluster have to be synchronized to the cellular network and therefore have to listen to pilot symbols in order to measure the channel state. In this way, even when some mobile stations of the cluster have no data to transmit, they may assist the data transmission for other mobile stations of the cluster, and a proper time synchronization of the mobile stations can still be guaranteed.

A further aspect of the invention relates to a mobile station, adapted for performing wireless communications with at least one base station of a cellular network using a first transmission technology, and being further adapted for performing short-range communications with other mobile stations of a cooperating cluster of mobile stations using a second transmission technology being different from the first transmission technology, the short-range communications being used for improving the performance of the wireless communications of the mobile station with the base station, preferably by using MIMO techniques for at least one of interference suppression and cancellation, in particular using at least one of transmit pre-coding for uplink transmissions and receive antenna weighting for downlink reception. The built-in capabilities of some of today's mobile stations to perform short-range communications using a transmission technology which is different from the transmission technology used for communicating with the base station may be used for performing cooperative communications without having to rely on the resources which have to be provided by the first transmission system, respectively by the base station.

In one embodiment, the transmission technology for the short-range communications is selected from the group consisting of: Wireless Local Area Network technology, Bluetooth technology, Ultra Wide Band technology, and wire-line technology. These and other short-range communication techniques may be used for forming a cooperating cluster.

In a further embodiment, the mobile station is adapted to perform the short-range communications for transmitting/receiving at least one of data, channel state information, and antenna weights to/from at least one further mobile station of the cluster, the data being preferably transmitted in the form of time-domain IQ samples, frequency domain IQ samples, soft bits, or decoded data. The antenna weights may be exchanged for performing MIMO communications between the clustered mobile stations and the base station.

A further aspect of the invention relates to a cooperating cluster for a cellular network, comprising at least two mobile stations as described above. Due to its multi-antenna capability, such a cluster of mobile terminals is able to transmit several data streams at once using the same time-frequency resources, i.e. doing MIMO spatial multiplexing. The current LTE standard only supports one transmit antenna (probably 2 in future releases) and thus has to be extended when a larger number of spatial streams has to be supported in the uplink.

In the downlink, with the available multi-antenna capability, the cluster of mobile stations is able to suppress interference from neighboring cells (e.g. by using optimum combining / interference rejection combining / MMSE etc.). In the uplink, interference to neighboring cells may be spatially suppressed by proper design of cluster transmit weights. A cluster which is formed close to the border of two or more cells is also able to transmit to multiple cells at the same time, thus creating large opportunities for coordinated multi-point transmission (COMP).

In one embodiment, the mobile stations of the cooperating cluster are adapted to perform short-range communications using a cooperation protocol defining one mobile station as a master station, and at least one further mobile station as a slave station. The cooperation protocol may in particular configure the data format for the transfer from the slave station to the master station and may activate / indicate to the terminal that there is response from its partner. The cooperation protocol may also configure the cooperation level, e.g. if float or integer data has to be transferred. Moreover, the cooperation protocol may be used for generating / processing requests for cooperation of one mobile station to another mobile station.

In another embodiment, the mobile stations are time synchronized, preferably using at least one of a time synchronization protocol, in particular a Precision Time Protocol, PTP, a Global Positioning System, GPS, and a synchronization mechanism inherent to the first and/or the second transmission technology. As has been explained above, proper synchronization among the mobile stations of the cluster and between the base station and the mobile stations is necessary and may be implemented using one or more of the synchronization mechanisms described above.

In another embodiment, the mobile stations are adapted to use the short-range communications to perform coordinated wireless communications with the base station to act as a single virtual mobile station. As indicated above, when the uplink pilot symbols of the mobile stations of the cluster are precoded with the same weights as the data, the cluster may appear transparent to the base station, the cluster acting as one virtual mobile.

A final aspect of the invention is implemented in a cellular network comprising at least one cooperating cluster of the type described above. The performance of the communications between the base station and the mobile stations of the cluster can be enhanced by using the short-range communications, leading to an improvement of the overall network performance. In particular when using MIMO techniques such as beamforming and linear precoding, the receive signal strength of a serving cell may be maximized and, at the same time, interference to neighboring cells may be suppressed.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a cellular network with a cooperating cluster performing downlink transmissions,
- **Fig. 2**: shows a schematic diagram of an embodiment of a cellular network with a cooperating cluster performing uplink transmissions, and
- **Fig. 3**: shows a schematic diagram of a data transfer process using a cooperation protocol between two mobile stations of a cluster.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

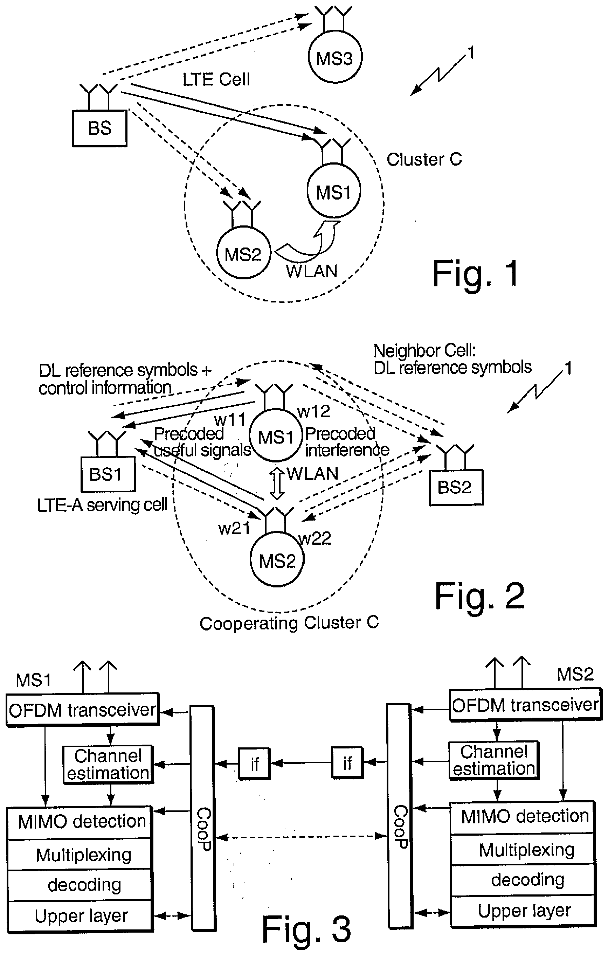

**Fig. 1** shows a simplified example of a cell of a cellular network **1**, in the present example being in compliance with the Long-Term Evolution, LTE, standard, the LTE cell having a single base station **BS** spanning an area of radio coverage (not shown). Three mobile stations **MS1** to **MS3** are served by the base station BS of the LTE cell. The first and second of the mobile stations MS1, MS2 form a cooperating cluster C, whereas the third mobile station MS3 does not participate in the cluster C. The communications of the mobile stations MS1, MS2 to the base station BS are performed according to the LTE standard, whereas the communications between the mobile stations MS1, MS2 are short-range communications using a different wireless technology, in the present case a WLAN technology, being out of the frequency band used for the communications with the base station BS.

One skilled in the art will appreciate that other transmission technologies may also be used for the communication between the mobile stations MS1, MS2 of the cluster C, for instance (but not limited to) Bluetooth technology, Ultra Wide Band technology, or wire-line technology (cabling).

For forming the cooperating cluster C, in the present example, the first mobile station MS1 has sent a coordination request to the second mobile station MS2 which has been accepted by a user of the second mobile station MS2. Although the first mobile station MS1 has also sent a coordination request to the third mobile station MS3, the latter does not participate in the cluster C. In the present case, this is due to non-approval of participation to the cluster by the user of the third mobile station MS3. Other causes for preventing a mobile station from joining the cluster C may be (but are not limited to): a) low battery, as part of the power of the participating mobiles is used for assisting other mobiles of the cluster in transmitting data, b) the fact that the third mobile station is out of the range of short-range WLAN transmissions, or c) too high velocity of the mobile station. Of course, instead of the user, the second / third mobile station MS2, MS3 themselves (e.g. a suitable software or hardware implemented thereon) may automatically accept or reject coordination requests based on the settings of a certain user. For instance, the settings may be such that all users which are part of a certain "community" will be automatically accepted based on an identification process, except for cases in which there are additional hurdles like the ones mentioned above (under a), b), c)).

In the example of Fig. 1, the first mobile station MS1 wants to receive data from the base station BS, and the second mobile station MS2 is assisting. For this purpose, the second mobile station MS2 is synchronized to the base station BS and reads the control channel in order to find the resource blocks intended for the first mobile station MS1. For this purpose, the second mobile station MS2 receives the time domain IQ-samples, performs a Fast-Fourier-Transform FFT and removes the cyclic prefix, CP. Then, the second mobile station MS2 selects the complex frequency domain resource element symbols which are targeted to the first mobile station MS1. The second mobile station MS2 then transmits those symbols via WLAN to the first mobile station MS1.

The first mobile station MS1 also performs the FFT and CP removal of the data received from the base station BS and thus obtains its own frequency-domain resource element symbols. Those symbols together with the ones received from the second mobile station MS2 can now be treated as if the first mobile station MS1 had four instead of two receive antennas. Channel estimation and receive combining and equalization is then performed for four receive antennas and the data can be decoded with higher quality (thus lower block error rate) as compared to the case when only the two receiver antennas of the first mobile station MS1 are used.

The first mobile station MS1, knowing that the cluster C will improve its receive Signal-to-Interference-Noise-Ratio, SINR, can now also report higher supported modulation and coding schemes (MCS) to the base station BS. This will improve the throughput for the first mobile station MS1 and thus of the overall LTE cell.

**Fig. 2** shows a second example of a communications network 1 with a cooperating cluster C of two mobile stations MS1, MS2, each having two transmit and receive antennas (as is the case, e.g. in an LTE-advanced system). The two mobile stations MS1, MS2 are served by a first base station **BS1** of the communications network 1, a second base station **BS2** which does not serve the mobile stations MS1, MS2 being also present in the communications network 1.

In the present example, the first mobile station MS1 wants to transmit uplink data, the second mobile station MS2 is assisting. Both the first and the second mobile stations MS1, MS2 measure the channel to the first base station BS1 based on downlink (DL) reference symbols. Additionally, the first and second mobile station MS1, MS2 also listen to the channel of the base station BS2 which spans a neighboring cell. The second mobile station MS2 transfers its channel knowledge using short-range communications (WLAN) to the first mobile station MS1. Due to the channel reciprocity when using the Time Division Duplex (TDD) mode (as long as high velocities for the mobile stations MS1, MS2 are avoided), those downlink measurements can be used as an uplink channel knowledge / estimation.

Therefore, the first mobile station MS1 may calculate a joint precoding vector for the cluster C, being a function of the measured joint channels of the cluster C. A first set of antenna weights w11 and w12 are used for the two transmit antennas of the first mobile station MS1. The weights w21 and w22 are intended for the second mobile station MS2 and are transferred to the second mobile station MS2 together with the data symbols via the WLAN link between the first and second mobile station MS1, MS2.

Typically, the latency of the short-range transmission technology, in the present case the WLAN technology, has to be small enough that the first mobile station MS1 and the second mobile station MS2 are able to react simultaneously on the scheduling grant of the first base station BS1. If this is difficult to achieve using a given short-range transmission technology, the data may already be transferred to the first mobile station MS1 in advance, so that only the weights have to be transferred on time. However, even the weights may be transferred in advance - for example, when the first mobile station MS1 does not know its assigned resource block, it may calculate preemptively weight sets for all possible resource blocks and transfer them to the second mobile station MS2 before knowing the exact scheduled resources. It will be understood that this approach works best for mobile stations MS1, MS2 having low mobility. Both mobile stations MS1, MS2 may now transmit the same data symbols with individual precoding weights per antenna.

For ensuring proper time synchronization of the mobile stations MS1, MS2 when performing the coordinated communication, a dedicated time synchronization protocol may be used, or synchronization mechanisms / protocols which are inherent to the first / second transmission technology may be employed. Also, a common time reference, e.g. provided by a GPS system, may be used. It will be understood that in general, all mobile stations MS1, MS2 of the cluster C have to be synchronized to the cellular network 1 and therefore have to listen to pilot symbols in order to measure the channel state. In this way, even when some mobile stations of the cluster have no data to transmit, they may assist the data transmission for other mobile stations of the cluster C.

As four transmit antennas provide four spatial degrees of freedom for the precoding design, the joint precoding vector for the first and second mobile station MS1, MS2 may now also take into account to spatially suppress interference caused at the two receiver antennas of the second base station BS2 and additionally maximize the coherent superposition of the receive signal at the first base station BS1. It will also be appreciated that when the uplink pilot symbols are precoded with the same weights as the data, the cluster C may appear transparent to the first base station BS1, acting as a single virtual mobile station. When the cluster C is close to the border between two cells, as is the case in Fig. 2, the mobile stations MS1, MS2 of the cluster may also communicate with the second base station BS2, thus allowing to perform coordinated multi-point transmissions (COMP).

Fig. 3 shows an example for the data transfer between the first and second mobile stations MS1, MS2 of the cooperating cluster C, using an Orthogonal Frequency Division Multiplex, OFDM, modulation and coding scheme. As is the case with Fig. 1 and Fig. 2, the first mobile station MS1 is the targeted (master) station, and the second mobile station MS2 is assisting, acting as a slave station. The slave terminal / station MS2 receives the OFDM samples in an OFDM transceiver, does a FFT and removes the CP. The slave terminal MS2 may choose to transfer the OFDM symbols, possibly with channel estimation information and/or MIMO detector information. Of course, the slave station MS2 may also choose to transfer decoded bits. Typically, the slave station MS2 transfers the received OFDM symbols to the first (master) station MS1 by re-sampling, as the OFDM symbols are complex float numbers.

At the master side (MS1), the input data from the second mobile station MS2 will be sent to a channel estimation module and from there to a MIMO detection module. Using the channel estimation information, the input stream of OFDM symbols from the second mobile station MS2 will be processed together with the data received in an OFDM transceiver of the first (master) station MS1 itself. In a receiver diversity scenario, the master station MS1 will do MRC in the MIMO detection module. The data from the MIMO detection module is then multiplexed, decoded and transferred to an upper layer for further processing. It will be understood that as the mobile stations MS1, MS2 are of identical construction, the second mobile station MS2 may equally well be operated as a master station, the first mobile station MS1 being used as a slave.

For performing the transfer of data between the mobile stations MS1, MS2 a Cooperation protocol (CooP) is introduced, cf. Fig. 3. The CooP protocol has at least the following functions: One mobile station / terminal may request cooperation from another mobile station through the CooP. The master station may configure the physical layer of the slave terminal, e.g. the resource blocks to receive and the MCS using the CooP. Also, the CooP may indicate to a mobile terminal that there is response from its partner. The CooP may also configure the data format for the data transfer from the slave terminal to the master terminal. Finally, the CooP may configure the cooperation level, e.g. transferring float data, integer data etc.

In summary, by using the cooperative communications as described herein, a localized cooperation cluster may be provided, which does not need the assistance of the base station. It will be appreciated that the mobile stations as described herein are not necessarily moving objects, as the clustering may also be advantageously applied to static stations / terminals.

Also, by using MIMO techniques / a MIMO transmission scheme, higher spectral efficiency may be achieved, caused by SINR gains of multiple antennas, also leading to higher cell border throughput and higher cell range, as the uplink transmit power limitation of a single mobile can be overcome by the cluster and the precoding gives additional array gain and diversity gain on top of it. Moreover, reduced uplink interference in neighboring cells may be provided, because linear precoding may spatially suppress interference. Reduced downlink interference from neighbor cells may also be obtained, as multi-antenna receive combining (e.g. MMSE) may be used to suppress unwanted signals.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for communications in a cellular network (1) comprising a plurality of mobile stations (MS1 to MS3) adapted for performing wireless communications with at least one base station (BS, BS1, BS2) using a first transmission technology, the method comprising:
forming a cooperating cluster (C) comprising two or more of the mobile stations (MS1, MS2), and
performing short-range communications between the mobile stations (MS1, MS2) of the cooperating cluster (C) using a second transmission technology being different from the first transmission technology for improving, for at least one mobile station (MS1, MS2) of the cluster (C), the performance of the wireless communications with the base station (BS), by using the cooperating cluster (C) with MIMO techniques for at least one of interference suppression and cancellation, by using at least one of transmit pre-coding for uplink transmissions and receive antenna weighting for downlink reception, wherein, for forming the cooperating cluster (C), at least one mobile station (MS1) requests cooperation with at least one further mobile station (MS2), the further mobile station (MS2) accepting or rejecting the request, based on at least one of an approval or disapproval of a user of the further mobile station (MS2), a battery status of the further mobile station (MS2), or a velocity of the further mobile station (MS2).

2. Method according to claim 1, wherein the transmission technology for the short-range communications is selected from the group consisting of: Wireless Local Area Network technology, Bluetooth technology, Ultra Wide Band technology, and wire-line technology.

3. Method according to any one of the preceding claims, wherein the short-range communications are performed using a cooperation protocol defining one mobile station (MS1) of the cluster (C) as a master station, and at least one further mobile station (MS2) of the cluster (C) as a slave station.

4. Method according to any one of the preceding claims, wherein the short-range communications are performed for transmitting at least one of data, channel state information, and antenna weights from at least one mobile station (MS2) of the cluster (C) to at least one further mobile station (MS1) of the cluster (C), the data being transmitted in the form of time-domain IQ samples, frequency domain IQ samples, soft bits, or decoded data.

5. Method according to any one of the preceding claims, wherein the mobile stations (MS1, MS2) of the cluster (C) use the short-range communications to perform coordinated wireless communications with the base station (BS) to act as a single virtual mobile station.

6. Method according to any one of the preceding claims, wherein the mobile stations (MS1 to MS3) of the cluster (C) are time synchronized, using at least one of a time synchronization protocol, a Global Positioning System, GPS, and a synchronization mechanism inherent to the first and/or the second transmission technology.

7. Mobile station (MS1), adapted for performing wireless communications with at least one base station (BS, BS1, BS2) of a cellular network (1) using a first transmission technology, and being further adapted for performing short-range communications with other mobile stations (MS2) of a cooperating cluster (C) of mobile stations (MS1, MS2) using a second transmission technology being different from the first transmission technology, the short-range communications being used for improving the performance of the wireless communications of the mobile station (MS1) with the base station (BS, BS1, BS2), by using the cooperating cluster (C) with MIMO techniques for at least one of interference suppression and cancellation, using at least one of transmit pre-coding for uplink transmissions and receive antenna weighting for downlink reception, wherein said mobile station (MS1) is configured to, for forming the cooperating cluster (C), request cooperation with at least one further mobile station (MS2), wherein the further mobile station (MS2) may accept or reject the request, based on at least one of an approval or disapproval of a user of the further mobile station (MS2), a battery status of the further mobile station (MS2), or a velocity of the further mobile station (MS2).

8. Mobile station according to claim 7, wherein the transmission technology for the short-range communications is selected from the group consisting of: Wireless Local Area Network technology, Bluetooth technology, Ultra Wide Band technology, and wire-line technology.

9. Mobile station according to claim 7 or 8, being adapted to perform the short-range communications for transmitting/receiving at least one of data, channel state information, and antenna weights to/from at least one further mobile station (MS2) of the cluster (C), the data being transmitted in the form of time-domain IQ samples, frequency domain IQ samples, soft bits, or decoded data.

10. Cooperating cluster (C) for a cellular network (1),
comprising at least two mobile stations (MS1, MS2) according to any one of claims 7 to 9.

11. Cooperating cluster according to claim 10, wherein the mobile stations (MS1, MS2) are adapted to perform short-range communications using a cooperation protocol defining one mobile station (MS1) as a master station, and at least one further mobile station (MS2) as a slave station.

12. Cooperating cluster according to claim 10 or 11, wherein the mobile stations (MS1, MS2) are time synchronized, using at least one of a time synchronization protocol, a Global Positioning System, GPS, and a synchronization mechanism inherent to the first and/or the second transmission technology.

13. Cooperating cluster according to any one of claims 10 to 12, wherein the mobile stations (MS1, MS2) are adapted to use the short-range communications to perform coordinated wireless communications with the base station (BS, BS1, BS2) to act as a single virtual mobile station.

14. Cellular network (1), comprising at least one cooperating cluster (C) according to any one of claims 10 to 13.

## Patentansprüche

1. Verfahren für Kommunikation in einem Mobilfunknetzwerk (1), umfassend eine Vielzahl von mobilen Stationen (MS1 bis MS3), angepasst für das Durchführen von drahtloser Kommunikation mit mindestens einer Basisstation (BS, BS1, BS2) unter Verwendung einer ersten Übertragungstechnologie, wobei das Verfahren umfasst:
Bilden eines kooperierenden Clusters (C), umfassend zwei oder mehr der mobilen Stationen (MS1, MS2), und
Durchführen von Nahbereichskommunikation zwischen den mobilen Stationen (MS1, MS2) des kooperierenden Clusters (C) unter Verwendung einer zweiten Übertragungstechnologie, die anders ist als die erste Übertragungstechnologie, um für mindestens eine mobile Station (MS1, MS2) des Clusters (C) die Leistung der drahtlosen Kommunikation mit der Basisstation (BS) zu verbessern, unter Verwendung des kooperierenden Clusters (C) mit MIMO-Techniken für mindestens eine der Interferenzunterdrückung und -löschung, unter Verwendung von mindestens eines von einer Übertragungs-Vorcodierung für Aufwärtsübertragungen und einer Empfangs-Antennengewichtung für den Abwärtsempfang, wobei beim Bilden des kooperierenden Clusters (C) mindestens eine mobile Station (MS1) eine Zusammenarbeit mit mindestens einer weiteren mobilen Station (MS2) anfordert und die weitere mobile Station (MS2) die Anfrage annimmt oder ablehnt, beruhend auf mindestens eines von einer Annahme oder Ablehnung eines Benutzers einer weiteren mobilen Station (MS2), einem Batteriestatus der weiteren mobilen Station (MS2) oder einer Geschwindigkeit der weiteren mobilen Station (MS2).

2. Verfahren nach Anspruch 1, wobei die Übertragungstechnologie für die Nahbereichskommunikation ausgewählt wird aus einer Gruppe bestehend aus: drahtloser lokaler Netzwerk-Technologie, Bluetooth-Technologie, Ultrabreitband-Technologie und Festnetz-Technologie.

3. Verfahren nach einem beliebigen der vorstehenden Ansprüche, wobei die Nahbereichskommunikation durchgeführt wird unter Verwendung eines Kooperationsprotokolls, das eine mobile Station (MS1) des Clusters (C) als eine Master-Station und mindestens eine weitere mobile Station (MS2) des Clusters (C) als eine Slave-Station definiert.

4. Verfahren nach einem beliebigen der vorstehenden Ansprüche, wobei die Nahbereichskommunikation durchgeführt wird, um mindestens entweder Daten, Kanalzustandsinformation und Antennengewichtung von mindestens einer mobilen Station (MS2) des Clusters (C) zu mindestens einer weiteren mobilen Station (MS1) des Clusters (C) zu übertragen, wobei die Daten in Form von Zeitbereich-IQ-Abtastwerten, Frequenzbereich-IQ-Abtastwerten, Soft-Bits oder decodierten Daten übertragen werden.

5. Verfahren nach einem beliebigen der vorstehenden Ansprüche, wobei die mobilen Stationen (MS1, MS2) des Clusters (C) die Nahbereichskommunikation verwenden, um eine koordinierte drahtlose Kommunikation mit der Basisstation (BS) auszuführen, welche als eine einzige virtuelle mobile Station agieren soll.

6. Verfahren nach einem beliebigen der vorstehenden Ansprüche, wobei die mobilen Stationen (MS1 bis MS3) des Clusters (C) zeitsynchronisiert sind, unter Verwendung von mindestens eines von einem Zeitsynchronisierungsprotokoll, einem globalen Positionierungssystem, GPS, und einem Synchronisierungsmechanismus, der zur ersten und/oder zur zweiten Übertragungstechnologie zugehörig ist.

7. Mobilstation (MS1), angepasst für das Durchführen von drahtloser Kommunikation mit mindestens einer Basisstation (BS, BS1, BS2) eines Mobilfunknetzwerks (1), unter Verwendung einer ersten Übertragungstechnologie, und ferner angepasst für das Durchführen von Nahbereichskommunikation mit anderen mobilen Stationen (MS2) eines kooperierenden Clusters (C) von mobilen Stationen (MS1, MS2), unter Verwendung einer zweiten Übertragungstechnologie, die anders ist als die erste Übertragungstechnologie, wobei die Nahbereichskommunikation verwendet wird zur Verbesserung der Leistung der drahtlosen Kommunikation der mobilen Station (MS1) mit der Basisstation (BS, BS1, BS2), unter Verwendung des kooperierenden Clusters (C) mit MIMO-Techniken für mindestens eine der Interferenzunterdrückung und -löschung, unter Verwendung von mindestens einer Übertragungs-Vorcodierung für Aufwärtsübertragungen und einer Empfangs-Antennengewichtung für den Abwärtsempfang, wobei besagte mobile Station (MS1) konfiguriert ist, zum Bilden des kooperierenden Clusters (C), für das Anfragen zur Kooperation mit mindestens einer weiteren mobilen Station (MS2), wobei die weitere mobile Station (MS2) die Anfrage annehmen oder ablehnen kann, auf der Basis mindestens eines von einer Annahme oder Ablehnung eines Benutzers einer weiteren mobilen Station (MS2), einem Batteriestatus der weiteren mobilen Station (MS2) oder einer Geschwindigkeit der weiteren mobilen Station (MS2).

8. Mobile Station nach Anspruch 7, wobei die Übertragungstechnologie für die Nahbereichskommunikation ausgewählt wird aus einer Gruppe bestehend aus: drahtloser lokaler Netzwerk-Technologie, Bluetooth-Technologie, Ultrabreitband-Technologie und Festnetz-Technologie.

9. Mobile Station nach Anspruch 7 oder 8, wobei diese angepasst ist für das Durchführen von Nahbereichskommunikation zum Übertragen/Empfangen von mindestens entweder Daten oder Kanalzustandsinformation oder Antennengewichtung zu/von mindestens einer weiteren mobilen Station (MS2) des Clusters (C), wobei die Daten in Form von Zeitbereich-IQ-Abtastwerten, Frequerizbereich-IQ-Abtastwerten, Soft-Bits oder decodierten Daten übertragen werden.

10. Kooperierender Cluster (C) für ein Mobilfunknetzwerk (1), umfassend mindestens zwei mobile Stationen (MS1, MS2) nach einem der Ansprüche 7 bis 9.

11. Kooperierender Cluster nach Anspruch 10, wobei die mobilen Stationen (MS1, MS2) angepasst sind zum Durchführen von Nahbereichskommunikation unter Verwendung eines Kooperationsprotokolls, das eine mobile Station (MS1) als eine Master-Station und mindestens eine weitere mobile Station (MS2) als eine Slave-Station definiert.

12. Kooperierender Cluster nach Anspruch 10 oder 11, wobei die mobilen Stationen (MS1, MS2) zeitsynchronisiert sind, unter Verwendung von mindestens eines von einem Zeitsynchronisierungsprotokoll, einem globalen Positionierungssystem, GPS, und einem Synchronisierungsmechanismus, der zur ersten und/oder zur zweiten Übertragungstechnologie zugehörig ist.

13. Kooperierender Cluster nach einem der Ansprüche 10 bis 12, wobei die mobilen Stationen (MS1, MS2) angepasst sind zum Verwenden der Nahbereichskommunikation zur Durchführung von koordinierter drahtloser Kommunikation mit der Basisstation (BS, BS1, BS2), welche als eine einzige virtuelle mobile Station agieren soll.

14. Mobilfunknetzwerk (1), umfassend mindestens einen kooperierenden Cluster (C) nach einem der Ansprüche 10 bis 13.

## Revendications

1. Procédé de communication dans un réseau cellulaire (1) comprenant une pluralité de stations mobiles (MS1 à MS3) adaptées pour établir des communications sans fil avec au moins une station de base (BS, BS1, BS2) à l'aide d'une première technologie de transmission, le procédé comprenant les étapes suivantes :
former un groupe coopératif (C) comprenant au moins deux des stations mobiles (MS1, MS2), et
établir des communications à courte distance entre les stations mobiles (MS1, MS2) du groupe coopératif (C) à l'aide d'une deuxième technologie de transmission différente de la première technologie de transmission afin d'améliorer, pour au moins une station mobile (MS1, MS2) du groupe (C), les performances des communications sans fil avec la station de base (BS), en utilisant le groupe coopératif (C) avec des techniques MIMO pour au moins un élément parmi la suppression et l'annulation d'interférence, en utilisant au moins un élément parmi le précodage de transmission pour la transmission sur liaison montante et la pondération d'antenne de réception pour la réception sur liaison descendante, dans lequel, pour former le cluster coopératif (C), au moins une station mobile (MS1) demande une coopération avec au moins une autre station mobile (MS2), l'autre station mobile (MS2) acceptant ou rejetant la demande, en fonction d'au moins un élément parmi l'approbation ou la désapprobation d'un utilisateur de l'autre station mobile (MS2), l'état de la batterie de l'autre station mobile (MS2), ou la vitesse de l'autre station mobile (MS2).

2. Procédé selon la revendication 1, dans lequel la technologie de transmission pour les communications à courte distance est sélectionnée dans le groupe constitué des éléments suivants : technologie de réseau local sans fil, technologie Bluetooth, technologie ultra large bande et technologie filaire.

3. Procédé selon l'une quelconque des revendications précédentes, dans lequel les communications à courte distance sont établies à l'aide d'un protocole de coopération définissant une station mobile (MS1) du groupe (C) comme station maître, et au moins une autre station mobile (MS2) du groupe (C) comme station esclave.

4. Procédé selon l'une quelconque des revendications précédentes, dans lequel les communications à courte distance sont établies pour transmettre au moins un élément parmi des données, des informations d'état de canal et des poids d'antenne, depuis au moins une station mobile (MS2) du groupe (C) vers au moins une autre station mobile (MS1) du groupe (C), les données étant transmises sous la forme d'échantillons IQ du domaine temporel, d'échantillons IQ du domaine fréquentiel, de « soft bits » (bits pondérés), ou de données décodées.

5. Procédé selon l'une quelconque des revendications précédentes, dans lequel les stations mobiles (MS1, MS2) du groupe (C) utilisent les communications à courte distance pour établir des communications sans fil coordonnées avec la station de base (BS) afin d'agir comme une seule station mobile virtuelle.

6. Procédé selon l'une quelconque des revendications précédentes, dans lequel les stations mobiles (MS1 à MS3) du groupe (C) sont synchronisées dans le temps, à l'aide d'au moins un élément parmi un protocole de synchronisation temporelle, le système mondial de localisation, GPS, et un mécanisme de synchronisation inhérent à la première et/ou la deuxième technologie de transmission.

7. Station mobile (MS1), adaptée pour établir des communications sans fil avec au moins une station de base (BS, BS1, BS2) d'un réseau cellulaire (1) à l'aide d'une première technologie de transmission, et étant en outre adaptée pour établir des communications à courte distance avec d'autres stations mobiles (MS2) d'un groupe coopératif (C) de stations mobiles (MS1, MS2) à l'aide d'une deuxième technologie de transmission différente de la première technologie de transmission, les communications à courte distance servant à améliorer les performances des communications sans fil de la station mobile (MS1) avec la station de base (BS, BS1, BS2), en utilisant le groupe coopératif (C) avec des techniques MIMO pour au moins un élément parmi la suppression et l'annulation d'interférence, en utilisant au moins un élément parmi le précodage de transmission pour la transmission sur liaison montante et la pondération d'antenne de réception pour la réception sur liaison descendante, ladite station mobile (MS1) étant configurée pour, afin de former le groupe coopératif (C), demander une coopération avec au moins une autre station mobile (MS2), l'autre station mobile (MS2) pouvant accepter ou rejeter la demande, en fonction d'au moins un élément parmi l'approbation ou la désapprobation d'un utilisateur de l'autre station mobile (MS2), l'état de la batterie de l'autre station mobile (MS2), ou la vitesse de l'autre station mobile (MS2).

8. Station mobile selon la revendication 7, dans laquelle la technologie de transmission pour les communications à courte distance est sélectionnée dans le groupe constitué des éléments suivants : technologie de réseau local sans fil, technologie Bluetooth, technologie ultra large bande et technologie filaire.

9. Station mobile selon la revendication 7 ou 8, adaptée pour établir les communications à courte distance pour transmettre/recevoir au moins un élément parmi des données, des informations d'état de canal et des poids d'antenne, à/depuis au moins une autre station mobile (MS2) du groupe (C), les données étant transmises sous la forme d'échantillons IQ du domaine temporel, d'échantillons IQ du domaine fréquentiel, de « soft bits » (bits pondérés), ou de données décodées.

10. Groupe coopératif (C) destiné à un réseau cellulaire (1), comprenant au moins deux stations mobiles (MS1, MS2) selon l'une quelconque des revendications 7 à 9.

11. Groupe coopératif selon la revendication 10, dans lequel les stations mobiles (MS1, MS2) sont adaptées pour établir des communications à courte distance à l'aide d'un protocole de coopération définissant une station mobile (MS1) comme station maître, et au moins une autre station mobile (MS2) comme station esclave.

12. Groupe coopératif selon la revendication 10 ou 11, dans lequel les stations mobiles (MS1, MS2) sont synchronisées dans le temps, à l'aide d'au moins un élément parmi un protocole de synchronisation temporelle, le système mondial de localisation, GPS, et un mécanisme de synchronisation inhérent à la première et/ou la deuxième technologie de transmission.

13. Groupe coopératif selon l'une quelconque des revendications 10 à 12, dans lequel les stations mobiles (MS1, MS2) sont adaptées pour utiliser les communications à courte distance pour établir des communications sans fil coordonnées avec la station de base (BS, BS1, BS2) afin d'agir comme une seule station mobile virtuelle.

14. Réseau cellulaire (1), comprenant au moins un groupe coopératif (C) selon l'une quelconque des revendications 10 à 13.
